# EUROPEAN PATENT SPECIFICATION

(11) **EP 2 992 239 B1**
(45) Date of publication and mention of the grant of the patent: **12.06.2019**
(21) Application number: 14791014.5
(22) Date of filing: 03.04.2014
(51) Int. Cl.: F16F 1/18, F16F 1/24, F16F 1/26, B60G 9/00, B60G 11/46, B60G 11/02

(54) **SPRING DEVICE AND SPRING SUSPENSION**
FEDERVORRICHTUNG UND FEDERAUFHÄNGUNG
DISPOSITIF DE RESSORT ET SUSPENSION À RESSORT

(30) Priority: 30.04.2013 SE 1350526
(43) Date of publication of application: 09.03.2016
(73) Proprietor: Scania CV AB, 151 87 Södertälje (SE)
(72) Inventor: JOHANSSON, Anders, S-125 33 Älvsjö (SE); BERKELUND, Göran, S-155 30 Nykvarn (SE)
(74) Representative: Scania CV AB
(86) International application number: PCT/SE2014/050403
(87) International publication number: WO 2014/178770

(56) References cited:
- DE-A1- 4 239 512
- FR-A- 679 034
- FR-A- 1 067 595
- FR-A- 1 567 176
- GB-A- 247 074
- GB-A- 247 074
- GB-A- 320 346
- GB-A- 767 504
- GB-A- 806 312
- GB-A- 868 812
- JP-A- H02 190 632
- JP-A- H06 173 986
- US-A- 1 403 153
- US-A- 1 638 516
- US-A- 1 799 880
- US-A- 1 900 841
- US-A- 2 510 418
- US-A- 2 709 581
- US-A1- 2007 045 915

## Description

### Scope of the invention

The present invention relates to a spring device in a spring suspension for a wheel axle in a vehicle according to the introduction to the independent claim.

### Background to the invention

The axle suspension of a vehicle connects a vehicular wheel axle with the body of the vehicle and must be designed for its ability to withstand exposure to large forces. Among other things the axle suspension is subject to longitudinal tensile loads during normal operation, and to longitudinal pressure loads arising at start-up and low speeds, for example. When cornering or giving way, the vehicle is also exposed to transverse forces, among other things increasing the transverse pressure on the wheel axles, then on the axle suspension too.

The axle suspension can be fitted with various safety set-ups to cushion the effect in case a break occurs. In one type of axle suspension, for example two-air-bellow (or air-spring) suspension, the wheel axle is suspended from the vehicle chassis by two spring links, each connecting the wheel axle with the bodywork via their own spring mounting. For safety reasons the spring link has at least two spring leaves in order to cope with the contingency of one of the leaves breaking.

An example of a spring link with one or more safety leaves is shown in GB247074. If the spring breaks, the broken parts are kept and supported in their normal relative positions. Even if the parts no longer fulfil their normal function, the parts which have broken are prevented from displacing the vehicle in a non-roadworthy manner.

US2007/0045915A1 shows a leaf spring design which includes a guard band that extends along a number of stacked leaf springs which are kept stacked by means of a spring mounting device. In the event of one of the leaf springs breaking, within certain limits, the broken pieces are held securely to the other leaf springs in the stack by the guard band. This prevents pieces that have broken from posing a hazard to other motorists on the road. However, the guard band does not prevent the axle from being angled if motive or tractive forces are in place.

Leaf springs with means for strengthening a portion of the leaf spring near an eye of the leaf springs are discussed in GB767504A, US1900841A and US1799880 A.

JP H02 190 632 A describes a single taper leaf which is formed with an eye portion on one end or both ends. A thin leaf spring member is provided with an end portion formed in a closed curve shape.

Using many interconnected leaf springs makes the spring link heavier, so in order to cut the cost of the vehicle the wish is to reduce its weight.

The likelihood of a break in the spring leaves used is normally distributed evenly across the leaves. In the event of a break in the spring leaves occurring and the spring leaves not being fitted with a safety device, the bearing force to the wheel axle disappears and the wheel axle can end up in close contact with the frame of the vehicle. The opposite side of the vehicle will then be raised and the entire vehicle can be over-inclined. Indeed, the wheel axle may also end up inclining from its normal position in a longitudinal vehicle direction, giving rise to what is known as caster. If the caster angle is great, it can destroy the brake cylinder under the vehicle, for example. In the event of, say, a two-leaf spring with a safety loop breaking, there will be redundancy in respect of both rigidity and longitudinal stability, whatever the position of the rupture. If a single-leaf spring is used instead and a break occurs, an unacceptably large part of the spring suspension's anti-banking stiffness will be lost.

The aim of the invention is thus to provide a spring device which has a lower weight than previous spring devices and, in particular, prevents the vehicle's roadworthiness being affected to any major extent if a break occurs in the spring device.

### Summary of the invention

The aim described above is achieved by means of a spring device that includes a leaf spring according to the independent claim. The spring device includes a guard band extending along two sides of a leaf spring and encloses the loop, as well as a clamping unit linking the guard band with the leaf spring.

By having a guard band that encloses the loop and a clamping unit that links the guard band to the leaf spring, the leaf spring can be kept together even when the leaf spring is exposed to rupture. The guard band also means that yaw stability can be preserved, enabling the vehicle to continue being controlled in a predictable manner in sharp bends even when breakage has occurred. The guard band should also follow closely the leaf spring and its loop in order to provide limited room for loop play. A spacer component between the loop and the guard band can be used to minimize play, among other things.

By placing the clamping unit adjacent to the loop, the loop is retained by the guard band and the clamping unit even if the leaf spring is subject to damage near the loop. The leaf spring can then be prevented from passing over the loop, and any upward shift in the wheel axle towards the vehicle frame restricted.

It is therefore desirable to confine any breakage to a loop area adjacent to the loop on the leaf spring so as to spare the brake cylinder. This can be done in a variety of ways, for instance by weakening the leaf spring in the loop area. Another way is to reinforce the leaf spring outside of the loop area. Deformation to the leaf spring can then be reduced to an acceptable level so as not to damage the other parts of the vehicle and enable the vehicle to continue being driven. By and large the vehicle's driving height can also be maintained. Driving height means the distance between a wheel axle and ground level.

According the invention the spring device includes a flat and single-leaf spring. The spring device then has one spring only, in other words, and that way the weight can be reduced as compared with having e.g. a two-leaf spring.

One embodiment also exemplifies a spring suspension for a vehicular wheel axle, with the spring suspension containing a spring device.

Various embodiments are described in the dependent claims and in the detailed description.

### Brief description of the figures attached

The invention will be described below with reference to the figures attached, of which:
Fig. 1 shows a vehicle with spring suspensions for the different wheel axles.
Fig. 2 shows a spring suspension according to one embodiment of the invention.
Fig. 3 shows a cross-section A-A of the spring suspension in Figure 2.
Fig. 4 shows an exposed spring device with guard band.
Figs 5A-5B show part of the spring device in Fig. 4 in side and aerial views.
Figs 6A-6B show the guard band in Fig. 4 exposed, in side and aerial views.
Fig. 7 shows an example of a machined leaf spring.
Fig. 8 shows an example of the way the spring device behaves when broken.

### Detailed description of preferred embodiments of the invention

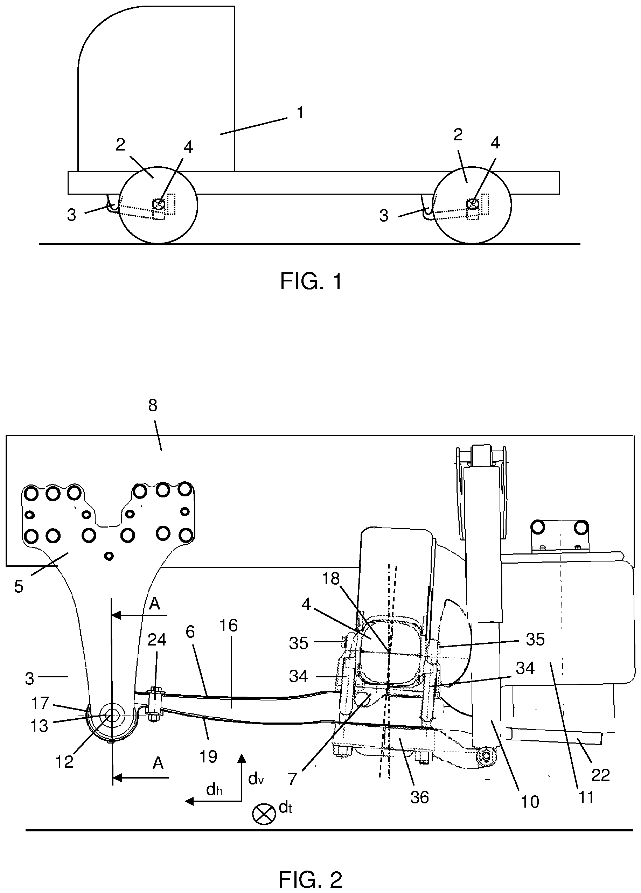

Fig. 1 schematically shows a goods vehicle 1 with wheels 2 connected with wheel axles 4. The wheel axles 4 are suspended via spring suspensions 3 to a vehicle body 8 (Fig. 2), e.g. a vehicle frame. The vehicle frame can be comprised of two elongated parallel frame side bars interconnected by a number of crossbeams.

Fig. 2 shows a spring suspension 3 for a wheel axle 4 for the goods vehicle 1 in Fig. 1 in more detail. The spring suspension 3 can be used for vehicles other than goods vehicles, such as passenger cars, emergency call-out vehicles etc. Fig. 2 shows only a spring suspension 3 positioned close to one end of the wheel axle 4, though it is implied that in most cases there will also be another spring suspension 3 at the other end of the same wheel axle 4.

The spring suspension 3 contains a spring device 6 extending in a horizontal vehicular direction dₕ and is mounted on the vehicle body 8 on the vehicle 1 via a spring mounting 5 housing a bearing 13. The spring mounting 5 is secured to the vehicle body 8, more specifically the frame side bar, using bolts or rivets for example. The spring device 6 is fitted at one end with a loop 17 mounted to the spring mounting 5 via a bolt 12 extending in a principally transverse vehicular direction dt through the bearing 13 and through the loop 17. Moreover, the spring device 6 is secured at the other end to the wheel axle 4 via an axle mounting 7. The centre 18 of the wheel axle 4 is indicated in the figure. The axle mounting 7 can be a bridge or cross-link, for instance, with yokes 34 fastened across protruding pins 35 on the wheel axle 4, bracing the spring device 16 against the wheel axle 4 by screwing the yokes 34 firmly into a plate 36 with bolts or screws. Other ways of securing the spring device 6 to the wheel axle 4 are conceivable, however. The axle mounting 7 is attached to a shock absorber 10, which in turn is secured to the vehicle body 8. In the example illustrated in the figure the spring device 16 has an extension 22 extending behind the wheel axle 4 in the horizontal vehicular direction dₕ in close contact with the bottom of an air bellow 11.

The spring device 6 contains a leaf spring 16 forming a loop 17 at one end. In most of the figures the loop 17 is facing away from the bottom of the vehicle, and hence towards ground level, and is then called the underlying loop 17. Instead, however, the loop 17 can face the bottom of the vehicle, and hence away from ground level, in which case it is called the overhead loop 17. The loop 17 can be a centred loop instead, known as a "Berlin eyelet". The spring device 6 also contains a guard band 19 extending along the leaf spring 16.

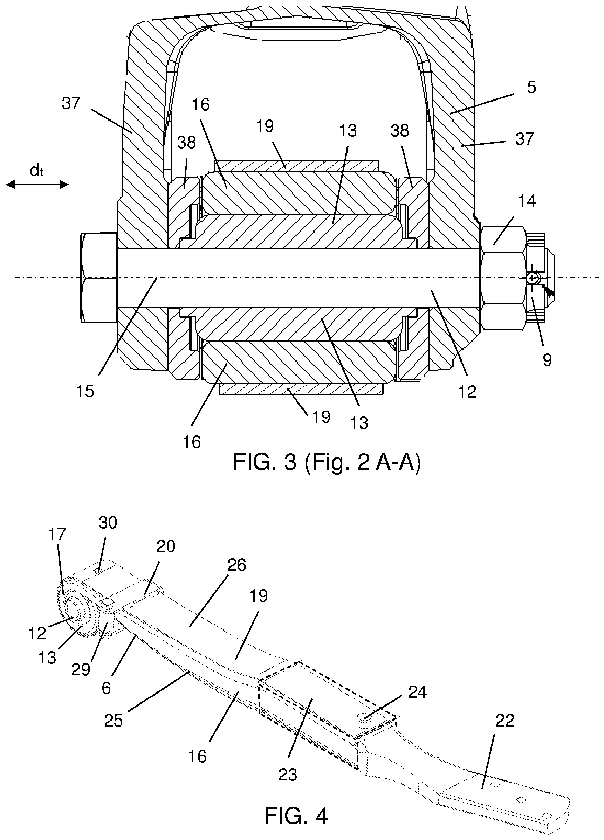

Fig. 3 shows a cross-section of the spring mounting 5 in Fig. 2 along the line A-A. The spring mounting 5 is designed with two yokes 37 here housing the bearing 13 between them. The bolt 12 extends through the bearing 13 along an axle 15, which here again forms an axle of rotation 15 for the loop 17 (Fig. 2). The bolt 12 is secured with a nut 14 and a bracing joint 9. The leaf spring 16 hugs the bearing 13 tightly and is flexible around the axle of rotation 15. Visible on the outside of the leaf spring 16 is the guard band 19, which is close by the leaf spring 16 here. Between the yokes 37 and the bearing 13 washers 38 can be arranged in order to assimilate forces in the transverse vehicular direction dt.

Fig. 4 shows an exposed spring device 6 used in Fig. 2. The figure shows how the guard band 19 extends from a mounting area 23 on the leaf spring 16 within which mounting area 23 the leaf spring 16 is adapted to fit onto the wheel axle 4 (Fig. 2). The guard band 19 then extends along a first side 25 on the leaf spring 16 in order to enclose the loop 17, and further along a second side 26 on the leaf spring 16 to the mounting area 23 on the leaf spring 16. The loop 17 encloses the bearing 13 and the bolt 12. The first and second sides 25,26 are opposite sides of the leaf spring 16. The first and second sides 25,26 also make up the outer sides of the leaf spring 16 in a vertical vehicular direction dᵥ (Fig. 2). The mounting area 23 includes, for instance, two opposing plate exteriors of the leaf spring 16, on which the guard band 19 is then positioned. The mounting area 23 is positioned between the extension 22 of the leaf spring 16 and the remainder of the leaf spring 16. The guard band 19 is secured to the leaf spring 16 with fastening components 24,30 in the mounting area 23 and/or around the loop 17. The fastening components 24,30 can comprise rivets or screws, for example. As shown in Fig. 2, the axle mounting 7 is then stretched across the mounting area 23 and thus additionally tightens the guard band 19 between the plate 36 and the leaf spring 16, and between the wheel axle 4 and the leaf spring 16.

The spring device 6 further includes a clamping unit 20 connecting the guard band 19 to the leaf spring 16. The clamping unit 20 can include, for example, a yoke positioned around the leaf spring 16 and the guard band 19, tightened with a screw joint 29. The clamping unit 20 can be permanently connected with only part of the guard band 19 extending along the first or second side 25,26 of the leaf spring 16 and attached to this part by welding, upsetting or other means of mechanical locking using e.g. a screw or rivet. An opposing part of the leaf spring 16 not permanently connected to the clamping unit 16 is then allowed to move in a space between the clamping unit 20 and the leaf spring 16 when the spring is in motion, for instance, or when the spring device 6 breaks. According to another embodiment the clamping unit 20 is permanently connected to the guard band 19 on both the first and second sides 25,26 around the leaf spring 16. As shown in the figure, the clamping unit 20 is positioned adjacent to the loop 17. In the event of breakage to the leaf spring 16 in the vicinity of the loop 17, the leaf spring 16 is prevented from passing over the loop 17. Essentially, the length of the spring device 6 can then be retained, as can the stability of the spring device 6 in the vertical vehicular direction dt. These properties can be improved by designing the guard band 19 closely around the leaf spring 16 so as to leave little or no clearance between the guard band 19 and the leaf spring 16 around the loop 17 on the leaf spring 16. An additional way of improving these properties is to place the clamping unit 20 as close to the loop 17 as possible.

According to one embodiment the guard band 19 is a split band and thus contains more than one part. This can be advantageous from a manufacturing perspective. The clamping unit 20 can then be used to join the parts of the guard band 19 into one continuous band.

The guard band 19 can be manufactured from e.g. flats, or steel with good tensile strength, with a thickness of between 1 and 5 mm, e.g. 2 or 3 mm. The width of the guard band 19 can match the width of the leaf spring 16, for example. According to one embodiment the guard band 19 is manufactured in one unit. The leaf spring 16 can be manufactured from, say, spring steel, steel or composite.

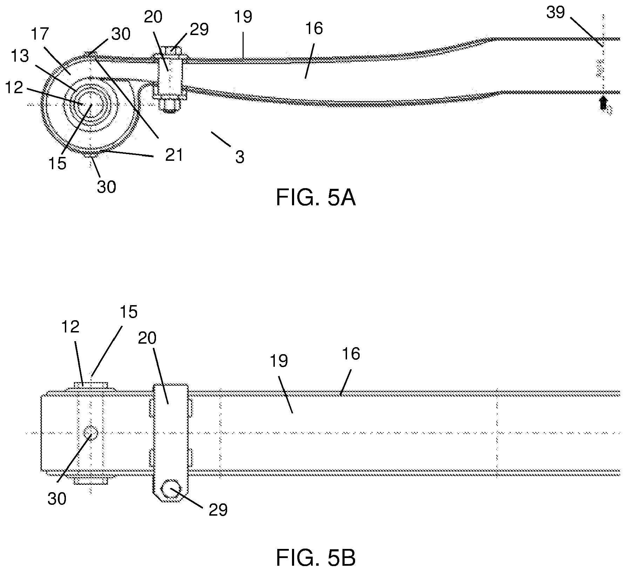

Fig. 5A shows part of the spring device 6 in Fig. 4 viewed sideways on. Here the guard band 19 is shown extending along the leaf spring 16 and its loop 17. The loop's axle of rotation 15 running around the centre of the loop 17 also forms an axle of rotation for the bearing 13 around the bolt 12. The guard band 19 is placed firmly against the leaf spring 16 with the clamping unit 20 and e.g. the screw joint 29. As shown in the figure, the spring device 6 can contain at least one spacer component 21 sited between the guard band 19 and the leaf spring 16, e.g. between the guard band 19 and the loop 17 on the leaf spring 16. The figure shows two spacer components 21 positioned between the loop 17 on the leaf spring 16 and the guard band 19, but multiple spacer components 21 can be positioned between the leaf spring 16 and the guard band 19, both around the loop 17 and on the remainder of the leaf spring 16, i.e. between the first side 25 of the leaf spring and the guard band 19, and/or between the second side 26 of the leaf spring and the guard band 19. The spacer component 21 or spacer components 21 can be made from a plastic or rubber material. The material can be at least partially compressible. The job of the spacer component 21 or spacer components 21 is to keep a distance between the guard band 19 and the leaf spring 16 so that the guard band 19 and the leaf spring 16 are not up against each other, which can then produce wear and tear on the parts. The spacer components 21 can also be used to centre the guard band 19 concentrically to the loop 17. The spacer components 21 in the figure are secured to the guard band 19 by means of the securing components 30.

Fig. 5A also shows a through drill hole 39 in the leaf spring 16 and the guard band 19. The drill hole 39 is arranged so as to receive a securing component 24 to secure the guard band 19 to the leaf spring 16.

Fig. 5B shows part of the spring device 6 in Fig. 4 seen from above. As can be seen in the figure, the width of the guard band 19 is primarily the same size as the width of the leaf spring 16.

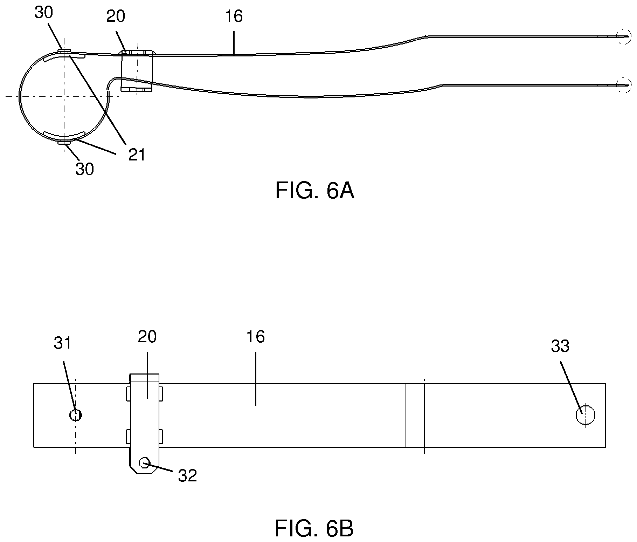

Fig. 6A shows the guard band 16 in Fig. 5A exposed, clearly showing that the spacer components 21 are secured to the guard band 16 with securing component 30. The securing components 30 here, therefore, just attach the spacer components 21 to the guard band 16. The clamping unit 20 is shown here without a screw joint.

Fig. 6B shows the guard band 16 in Fig. 5B exposed and without a securing component 30. The guard band 16 here displays a hole 31 for securing the component 30, a similar hole 30 being found on the opposite side of the guard band 16 to take a securing component 30. The clamping unit 20 also displays a hole 32 for the screw joint 32. The guard band 16 also displays a hole 33 which is positioned on the guard band 33 so as to align with the drill hole 39 in the leaf spring 16 (Fig. 5A). On the guard band 16 placed up against the second, opposing side of the leaf spring 16 a corresponding hole 33 is arranged, aligning with the drill hole 39. The illustrated holes 30,31,32,33,39 and attendant joint can be greater or smaller in number, however.

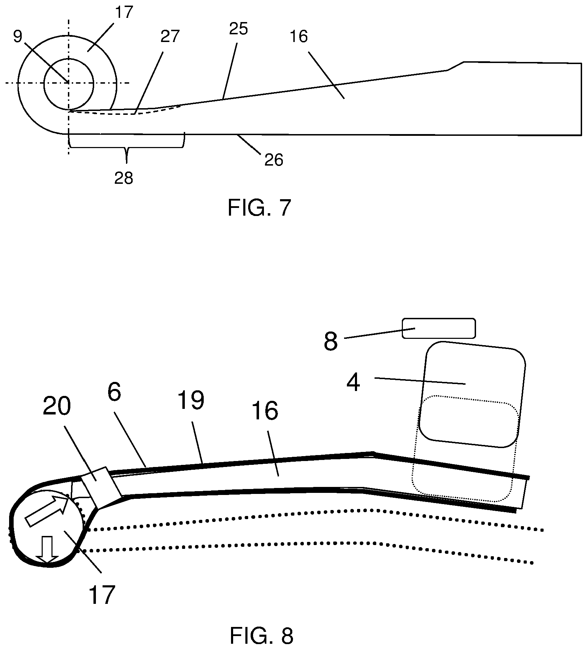

In a basic design the leaf spring 16 has a shape that tapers towards the loop 17 from the mounting area 23 in order to be able to uniformly absorb forces along the leaf spring 16 to which the leaf spring 16 is subject by virtue of being mounted to the vehicle 1. In order to confine any breakage to the vicinity of the loop 17, the leaf spring 16 can be treated in various ways. Fig. 7 shows the spring device 6 according to an embodiment in which the leaf spring 16 contains a recessed section 27 in conjunction with the loop 17. The thickness of the leaf spring 16 is therefore reduced in the recessed section 27 beyond the tapering shape in the basic embodiment of the leaf spring 16. The recessed section 27 is preferably designed in a loop area 28 on the leaf spring 16 extending from one point on the leaf spring 16 where the leaf spring 16 is up against itself in order to form the loop 17, along approximately one quarter of the leaf spring 16 along the horizontal vehicular direction dₕ facing the mounting area 23. The recessed section 28 can be positioned on either the first or the second side 25,26 of the leaf spring 16, or alternatively distributed over both sides 25,26.

As a supplement or an alternative, either of the leaf spring's first or second side 25,26 can have been machined over an area outside of the loop area 28 in conjunction with the loop 17 to increase strength in the area outside the loop area 28. Machining can be done by stress peening, e.g. cold hammering. Compressive stresses are then built into the exterior of the leaf spring 16. The rest of the leaf spring 16 is loaded with flexural stress using a central load. Stress peening should preferably be done on the static tensile-stressed side, which is usually the side 25,26 directed towards ground level when the leaf spring 16 has been fitted.

As an additional complement or alternative to the embodiments described above, the thickness of the leaf spring 16 can be increased beyond the loop area 28.

Fig. 8 illustrates how the spring device 6 can behave in the event of a break near the loop 17 when the spring device 6 contains the leaf spring 16, the guard band 16 and the clamping unit 20. As described in connection with Fig. 2, the spring device 6 is secured to a wheel axle 4. The dashed lines show where the spring device 6 and the wheel axle 4 were located before the break occurred, so the leaf spring 16 has come off adjacent to the loop 17, and the guard band 16 is reconfigured by the lifting force on the spring device 6. The wheel axle 4 is moved towards the vehicle body 8. The elongated part of the leaf spring 16 will run over the loop 17 but be obstructed by the guard band 16 and the clamping unit 21 holding down the leaf spring 16. The loop 17 is prevented from dropping off through the guard band 16 and the clamping unit 21. The clamping unit 21 must be positioned near the loop 17, and the space, or the clearance, between the clamping unit 21 and the leaf spring 16 should be small in order to prevent the loop 17 from dropping off the spring device 6. The elongated part of the leaf spring 16 is therefore prevented from shifting relative to the loop 17 any more than permitted by the clearance between the loop 17 and the guard band 16 as well as any extension to the guard band 16.

The present invention is not restricted to the embodiments described above. Various alternatives, modifications and equivalents can be used. The embodiments listed above do not, therefore, restrict the scope of the invention, which is defined by the claims attached.

## Claims

1. A spring device (6) including a single-leaf spring (16) with a loop (17) at one end intended to be fitted to a vehicle body (8), the leaf spring (16) further being adapted to fit onto a wheel axle (4) via an axle mounting (7), the spring device (6) contains a guard band (19) and a clamping unit (20) linking the guard band (19) with the leaf spring (16), **characterized in that** the guard band is made from flats and has a thickness of between 1-5 mm, extending from a mounting area (23) on the leaf spring (16), within which mounting area (23) the leaf spring (16) is adapted to fit onto the wheel axle (4) and along a first side (25) of the leaf spring (16) in order to enclose the loop (17); the guard band (19) then extends further along a second side (26) of the leaf spring (16) to the mounting area (23) on the leaf spring (16).

2. The spring device (6) according to claim 1, the clamping unit (20) being positioned adjacent to the loop (17).

3. The spring device (6) in accordance with any of previous claims, the leaf spring (16) tapering in shape in the direction of the loop (17).

4. The spring device (6) in accordance with any of previous claims, the leaf spring (16) including a recessed section (27) adjacent to the loop (17).

5. The spring device (6) in accordance with any of previous claims, either of the leaf spring's first or second sides (25,26) being machined over an area outside a loop area (28) adjacent to the loop (17) in order to increase strength in the area outside the loop area (28).

6. The spring device (6) in accordance with any of previous claims, containing at least one spacer component (21) between the guard band (19) and the leaf spring (16).

7. The spring device (6) according to claim 6, the spacer component (21) being positioned between the guard band (19) and the loop (17) on the leaf spring (16).

8. The spring device (6) according to any of the preceding claims, the guard band (19) being secured to the leaf spring (16) with a securing component (30).

9. A spring suspension (3) for a wheel axle (4) for a vehicle (1), the spring suspension (3) including a spring device (6) according to any of claims 1 to 8, the spring device (6) extending in a horizontal vehicular direction and being fitted to a vehicle body (8) on the vehicle (1) via a spring mounting (5) housing a bearing (13), the spring device (6) being fitted at the end with a loop (17) fitted to the spring mounting (5) via a bolt (12) extending in a primarily transverse vehicular direction through the bearing (13) and through the loop (17), the spring device (6) further being secured at its other end to the wheel axle (4) via an axle mounting (7).

## Patentansprüche

1. Federvorrichtung (6), umfassend eine Einblattfeder (16) mit einer Öse (17) an einem Ende, die dazu vorgesehen ist, an dem Fahrzeugkörper (8) angebracht zu werden, wobei die Blattfeder (16) ferner dazu eingerichtet ist, auf einer Radachse (4) über einen Achsenaufbau (7) angebracht zu werden, wobei die Federvorrichtung (6) ein Schutzband (19) und eine Klemmeinheit (20) umfasst, die das Schutzband (19) mit der Blattfeder (16) verbindet, **dadurch gekennzeichnet, dass**
das Schutzband aus Lagen gebildet ist und eine Dicke zwischen 1 bis 5 mm aufweist, wobei es sich von einem Montagebereich (23) der Blattfeder (16), innerhalb welchem Montagebereich (23) die Blattfeder (16) dazu eingerichtet ist, auf der Radachse (4) angebracht zu werden, und entlang einer ersten Seite (25) der Blattfeder (16) erstreckt, um die Öse (17) zu umschließen; und
das Schutzband (19) sich dann ferner entlang einer zweiten Seite (26) der Blattfeder (16) zu dem Montagebereich (23) der Blattfeder (16) erstreckt.

2. Federvorrichtung (6) nach Anspruch 1, wobei die Klemmeinheit (20) benachbart zur Öse (17) angeordnet ist.

3. Federvorrichtung (6) nach einem der vorhergehenden Ansprüche, wobei sich die Blattfeder (16) in ihrer Form in Richtung der Öse (17) verjüngt.

4. Federvorrichtung (6) nach einem der vorhergehenden Ansprüche, wobei die Blattfeder (16) einen vertieften Bereich (27) benachbart zur Öse (17) umfasst.

5. Federvorrichtung (6) nach einem der vorhergehenden Ansprüche, wobei jede der ersten oder zweiten Seiten (25,26) der Blattfeder in einem Bereich außerhalb eines Ösenbereichs (28), der zu der Öse (17) benachbart ist, bearbeitet sind, um die Festigkeit des Bereichs außerhalb des Ösenbereichs (28) zu steigern.

6. Federvorrichtung (6) nach einem der vorhergehenden Ansprüche, umfassend wenigstens eine Abstandskomponente (21) zwischen dem Schutzband (19) und der Blattfeder (16).

7. Federvorrichtung (6) nach Anspruch 6, wobei die Abstandskomponente (21) zwischen dem Schutzband (19) und der Öse (17) auf der Blattfeder (16) positioniert ist.

8. Federvorrichtung (6) nach einem der vorhergehenden Ansprüche, wobei das Schutzband (19) an der Blattfeder (16) durch eine Sicherungskomponente (30) gesichert ist.

9. Federaufhängung (3) für eine Radachse (4) für ein Fahrzeug (1), wobei die Federaufhängung (3) eine Federvorrichtung (6) nach einem der Ansprüche 1-8 umfasst, wobei die Federvorrichtung (6) sich entlang einer horizontalen Fahrzeugrichtung erstreckt und an einem Fahrzeugkörper (8) an dem Fahrzeug (1) über einen Federaufbau (5) angebracht ist, der ein Lager (13) aufnimmt, wobei die Federvorrichtung (6) an dem einen Ende mit einer Öse (17) ausgebildet ist, die an dem Federaufbau (5) durch einen Bolzen (12) angebracht ist, der sich in einer im Wesentlichen senkrechten Richtung zur Fahrzeugrichtung durch das Lager (13) und durch die Öse (17) erstreckt, wobei die Federvorrichtung (6) ferner an ihrem anderen Ende mit der Radachse (4) durch einen Achsenaufbau (7) verbunden ist.

## Revendications

1. Dispositif à ressort (6) incluant un ressort monolame (16) avec une boucle (17) à une extrémité destinée à être adaptée sur une carrosserie de véhicule (8), le ressort à lame (16) étant en outre adapté pour s'insérer sur un essieu de roue (4) par le biais d'un montage d'essieu (7), le dispositif à ressort (6) contenant une bande de protection (19) et une unité de serrage (20) reliant la bande de protection (19) au ressort à lame (16), **caractérisé en ce que** la bande de protection est réalisée à partir de plats et a une épaisseur comprise entre 1 et 5 mm, s'étendant depuis une zone de montage (23) sur le ressort à lame (16), zone de montage (23) dans laquelle le ressort à lame (16) est conçu pour s'adapter sur l'essieu de roue (4) et le long d'un premier côté (25) du ressort à lame (16) afin de renfermer la boucle (17) ; la bande de protection (19) s'étend ensuite davantage le long d'un second côté (26) du ressort à lame (16) sur la zone de montage (23) sur le ressort à lame (16).

2. Dispositif à ressort (6) selon la revendication 1, l'unité de serrage (20) étant positionnée à côté de la boucle (17).

3. Dispositif à ressort (6) selon l'une quelconque des revendications précédentes, le ressort à lame (16) ayant une forme se rétrécissant dans la direction de la boucle (17).

4. Dispositif à ressort (6) selon l'une quelconque des revendications précédentes, le ressort à lame (16) incluant une section creuse (27) adjacente à la boucle (17).

5. Dispositif à ressort (6) selon l'une quelconque des revendications précédentes, l'un des premier et second côtés (25, 26) du ressort à lames étant usiné sur une zone hors d'une zone de boucle (28) adjacente à la boucle (17) afin d'augmenter la résistance dans la zone hors de la zone de boucle (28).

6. Dispositif à ressort (6) selon l'une quelconque des revendications précédentes, contenant au moins un composant d'entretoise (21) entre la bande de protection (19) et le ressort à lame (16).

7. Dispositif à ressort (6) selon la revendication 6, le composant d'entretoise (21) étant positionné entre la bande de protection (19) et la boucle (17) sur le ressort à lame (16).

8. Dispositif à ressort (6) selon l'une quelconque des revendications précédentes, la bande de protection (19) étant fixée au ressort à lame (16) avec un composant de fixation (30) .

9. Suspension à ressort (3) pour un essieu de roues (4) pour un véhicule (1), la suspension à ressort (3) incluant un dispositif à ressort (6) selon l'une quelconque des revendications 1 à 8, le dispositif à ressort (6) s'étendant dans une direction de véhicule horizontale et étant adapté sur une carrosserie de véhicule (8) sur le véhicule (1) par le biais d'un montage par ressort (5) abritant un palier (13), le dispositif à ressort (6) étant équipé à l'extrémité d'une boucle (17) adaptée sur le montage par ressort (5) par le biais d'un boulon (12) s'étendant dans une direction de véhicule essentiellement transversale à travers le palier (13) et à travers la boucle (17), le dispositif à ressort (6) étant en outre fixé à son autre extrémité à l'essieu de roue (4) par le biais d'un montage sur essieu (7).
